# EUROPÄISCHE PATENTSCHRIFT

(11) **EP 0 618 120 B1**
(45) Veröffentlichungstag und Bekanntmachung des Hinweises auf die Patenterteilung: **08.09.1999**
(21) Anmeldenummer: 94103260.9
(22) Anmeldetag: 04.03.1994
(51) Int. Cl.: B60T 17/20, B61H 13/02

(54) **Vorrichtung zu Be- bzw. Entlüften einer Steuerleitung**
Device for pressurising or venting a control line
Dispositif pour mettre sous pression ou purger un conduit de contrôle

(30) Priorität: 01.04.1993 DE 4310739
(43) Veröffentlichungstag der Anmeldung: 05.10.1994
(73) Patentinhaber: KNORR-BREMSE Systeme für Schienenfahrzeuge GmbH, 80809 München (DE); Deutsche Bahn AG, 32423 Minden (DE)
(72) Erfinder: Haupt, Robert, D-81669 München (DE); Wosegien, Bernd, D-81735 München (DE); Sonder, Egbert, D-32425 Minden (DE); Pawelek, Ingo, D-32425 Minden (DE); Rettig, Wilfried, D-32425 Minden (DE)

(56) Entgegenhaltungen:
- EP-A- 0 025 488
- DE-A- 3 800 520
- DE-U- 9 213 352

## Beschreibung

Die vorliegende Erfindung befaßt sich mit einer insbesondere als Notbremszugkasten ausgebildeten Vorrichtung zum Be- bzw. Entlüften einer Steuerleitung gemäß dem Oberbegriff des Anspruchs 1, die insbesondere geeignet die Steuerleitung für Druckluftbremsen in Schienenfahrzeugen mit einem geeigneten Mechanismus eindeutig in eine sichere Schließ- bzw. Öffnungsstellung zu bringen.

Derartige Vorrichtungen sind im Stand der Technik seit langem bekannt und werden insbesondere in der Knorr-Gerätebeschreibung TA 1279a näher beschrieben. Auch das DE-Gm 92 13 352 zeigt eine derartige Vorrichtung. Diese Vorrichtung wird im allgemeinen mit Notbremszugkasten bezeichnet und besteht äußerlich gesehen im wesentlichen aus einem Gehäuse, an dem ein Handzuggriff zur Betätigung eines Mechanismus im Innern des Gehäuses angebracht ist. Dieser Handzuggriff dient zur Betätigung eines Mechanismus, der die Notbremsung einleitet, einem Schieber, an dem der Handgriff befestigt ist und einem Hebel, der mit dem Ende einer Kolbenstange eines Ventils im Eingriff steht. Dieser Hebel wird durch eine Sperre nach einer möglichen Betätigung in der Auslösestellung gehalten, damit die Steuerleitung eines pneumatischen Steuerungssystems vollständig entlüftet werden kann. Die Sperre schließt ein einfaches Rückstellen eines Notbremszugkastens bzw. dessen Handzuggriffes nach einer Betätigung aus. An der Stellung des Handgriffes kann erkannt werden, welcher Notbremszugkasten bedient wurde, was aus Sicherheitsgründen erforderlich ist. Am betätigten Notbremszugkasten kann dann mittels eines speziellen Mehrkantschlüssels (Schaffnerschlüssel) die Sperre wieder aufgehoben werden und eine Rückstellung unter Schließen des Ventils erfolgen.

Bei dieser oben beschriebenen Vorrichtung kann es jedoch passieren, daß das Ventil nur teilweise leicht geöffnet wird, wenn der Hebel oder der Handgriff ebenfalls nur leicht bewegt wurde, ohne daß der Verriegelungsmechanismus einrastet.

Ferner sind die Reibungskräfte infolge eines sich verkantenden Schiebemechanismus verhältnismäßig groß, was nicht unbedingt zum sicheren Betreiben des Notbremszugkasten beiträgt.

Daher ist es Aufgabe der vorliegenden Erfindung, eine Vorrichtung zum Be- bzw. Entlüften einer pneumatischen Steuerleitung bereitzustellen, deren Betriebssicherheit durch eindeutige Stellungen des Belüftungsventils der Steuerleitung gewährleistet ist und die kostengünstig herstellbar ist.

Diese Aufgabe wird durch die kennzeichnenden Merkmale des Anspruchs 1 gelöst.

Demnach ist die erfindungsgemäße Vorrichtung für einen pneumatischen Notbremszugkasten gemäß des Oberbegriffs des Anspruchs 1 gekennzeichnet durch
- eine Ausnehmung an einer Schwenkraste, die mittels eines Bolzens gelenkig gelagert ist, wobei
- die Schwenkraste in der Nähe der Ausnehmung eine ballige Reibfläche aufweist, die an der Stirnfläche eines Riegelbolzens anliegt, wobei
- der Riegelkolben mit einem Bolzen an einem mehrarmigen Hebel angelenkt ist, und
- der mehrarmige Hebel mittels eines Bolzens am Gehäuse gelenkig befestigt ist, wobei
- der mehrarmige Hebel eine Verzahnung aufweist, in die das Rückstellelement eingreift, und
- die Schwenktaste mittels eines Bolzens gelenkig mit dem Handzugriff verbunden ist.

Vorteilhafte Ausbildungen der vorliegenden Erfindung ergeben sich aus den Unteransprüchen.

Vorteilhaft für die Konstruktion der vorliegenden Erfindung ist die Tatsache, daß das Ventil der Steuerleitung und der elektrische Schalter zur Signalgebung zusammen mit dem gesamten Schaltmechanismus des Notbremszugkastens in einem Gehäuse untergebracht sind.

In vorteilhafter Weise ist im Innern des Gehäuses der Schaltmechanismus aus verschiedenen Elementen zusammengesetzt, wobei der Schaltmechanismus bei Betätigung des Handzuggriffes bei einer Notbremsung das Ventil der Steuerleitung durch vorteilhafte Ausbildung der einzelnen Teile sicher öffnet und durch Betätigung eines Rückstellelementes vorteilhafterweise mittels einer Übersetzung das Ventil der Steuerleitung leichtgängig wieder schließt.

Dabei ist es für die Bauweise des Mechanismus von Vorteil, die Schwenkraste an ihrem einen Ende gabelförmig auszubilden und an ihrem gegenüberliegenden Ende mit einer Steuerraste zu versehen, die bei Drehung um einen Befestigungsbolzen über die Kante des oben erwähnten Riegelkolbens vor dem Ventil der Steuerleitung einschnappt. Dabei ist es vorteilhaft, eine ballige Reibfläche in der Nähe der Ausnehmung bzw. Raster vorzusehen, die an der Stirnfläche des Riegelkolbens anliegt und diesen entgegen der Kraft einer Feder in der Schließstellung für die Steuerleitung so lange hält, bis die Ausnehmung den Riegelkolben um ein bestimmtes Maß, das der Tiefe der Ausnehmung entspricht, freigibt.

Von besonderer Wichtigkeit für die das sichere Öffnen ist eine Einrichtung an dem mehrarmigen Hebel, die vorteilhaft in der Nähe des Befestigungsbolzens des mehrarmigen Hebels herausragend angebracht ist und mittels eines Bolzens einen Anschlag für die Schwenkraster darstellt. Dieser Anschlag dient dazu, den mehrarmigen Hebel für den Fall einer fälschlichen, irgendwie bedingten Nichtöffnung des Ventils bzw. des Riegelkolbens mit vergrößerter Kraftaufwendung am Handzuggriff weiterzubewegen und damit den Riegelkolben mit Gewalt zu verschieben. Durch die gabelförmige Ausbildung des mehrarmigen Hebels ist es vorteilhaft, den Riegelkolben mit einer Bohrung zu durchsetzen, in die ein Bolzen eingreift, mit dem der Riegelkolben an dem gabelförmigen mehrarmigen Hebel drehbar befestigt ist.

Somit ist auf einfache und sichere Weise gewährleistet, daß das Ventil auch unter widrigen Umständen, z.B. Festkleben, Federbruch, Verklemmen oder bei Vorliegen anderer Ursachen, die nicht näher zu erläutern sind, formschlüssig geöffnet werden kann, ohne dabei weitere Hilfsmittel zu beanspruchen.

Für das Zusammenwirken der einzelnen Elemente ist es vorteilhaft, ein Führungselement mittels eines verstifteten Bolzens mit der Schwenkraste zu verbinden, wobei der Stift eine Drehbewegung des Handzuggriffes, der an dem Bolzen befestigt ist, verhindert.

Das Führungselement ist in geeigneter Weise mit einer Druckfeder druckbeaufschlagt, die sich auf der einen Seite am Gehäuse und auf der anderen Seite an einem Vorsprung des Führungsbolzens am oberen Ende abstützt.

Durch die mehrfach verzahnte Übersetzung am unteren Arm des mehrarmigen Hebels gelingt es in einfacher Weise, den mehrarmigen Hebel leichtgängig zu bewegen und damit eine Rückstellung des Riegelkolbens bzw. des Ventilsitzes der Steuerleitung zu ermöglichen.

Die Betätigung eines elektrischen Schalters, der an der dem Ventil gegenüberliegender Seite angebracht ist, erfolgt durch einen langgestrecktem Arm des mehrarmigen Hebels, der vorteilhaft an seinem Ende zwei Reibflächen aufweist, die in einem bestimmten Winkel zueinander geneigt sind.

Weitere vorteilhafte Ausbildungen ergeben sich aus den Unteransprüchen und der nachfolgenden detaillierten Beschreibung anhand der beigefügten Zeichnungen.

Es zeigt
- Figur 1: den schematischen Aufbau des erfindungsgemäßen Notbremszugkastens, in dessen unbetätigtem Zustand in einer seitlichen Aufbruchdarstellung;
- Figur 2: die Draufsicht des Notbremszugkastens ohne eine Abdeckung des Gehäuses;
- Figur 3a: die Seitenansicht des erfindungsgemäßen Schwenkrasters (8);
- Figur 3b: die Draufsicht des erfindungsgemäßen Schwenkrasters (8);
- Figur 4a: die Stirnansicht des mehrarmigen Hebels (14);
- Figur 4b: einer Seitenansicht des erfindungsgemäßen, gabelförmigen, mehrarmigen Hebels (14) mit seiner Verzahnung (16).

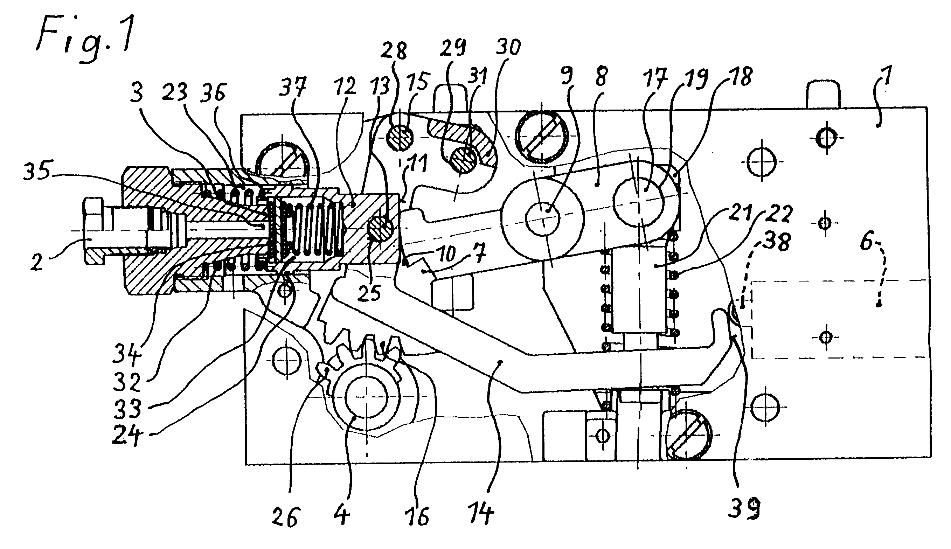

In Figur 1 ist die erfindungsgemäße Vorrichtung in ihrem zusammengebauten Zustand in einem Gehäuse 1 dargestellt. Die Vorrichtung besteht im wesentlichen aus einem Gehäuse 1, an das die Steuerleitung 2 der pneumatischen Bremsanlage des Schienenfahrzeugs herangeführt und mittels einer Verschraubung an dem Ventil 3 der Steuerleitung 2 befestigt wird. Die Steuerleitung 2 führt zu einem nicht dargestellten Notbremsventil, durch welches sie normalerweise mit Druckluft gefüllt wird. Durch Betätigen der Vorrichtung, d.h. des Notbremszugkastens, ist die Steuerleitung 2 entlüftbar, wodurch das Notbremsventil veranlaßt wird, die nicht dargestellte Hauptluftleitung der Druckluftbremse über einen großen Querschnitt zu entlüften und somit eine Notbremsung zu bewirken. An die Steuerleitung 2 sind mehrere, örtlich getrennt angeordnete, erfindungsgemäße Vorrichtungen anschließbar, die Notbremsung ist somit von mehreren Stellen aus manuell einleitbar.

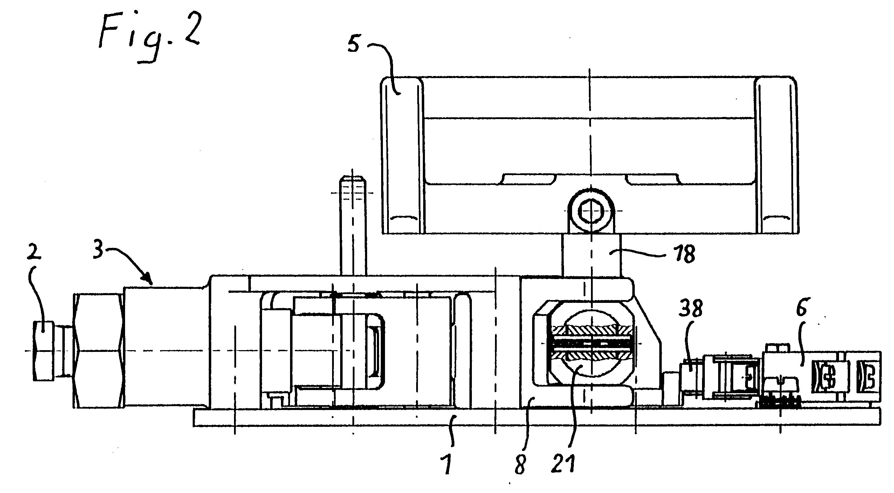

Im unteren Teil des Gehäuses 1 befindet sich das Rückstellelement 4, an dessen Umfang segmentartig eine Verzahnung mit wenigstens einem Zahn 26 angeordnet ist. Der Handgriff 5 (Fig.2) dient dazu, den Mechanismus im Innern des Gehäuses 1 zu bewegen, um damit die Steuerleitung der pneumatischen Bremsanlage zu entlüften. Dem Ventil 3 gegenüber ist der elektrische Schalter 6 montiert, der infolge der Bewegung des mehrarmigen Hebels 14 betätigt wird. Die Schwenkraste 8 ist durch einem Bolzen 9 drehbar am Gehäuse 1 gelagert, wobei die Schwenkraste 8 gelenkig über den Bolzen 17 mit dem Führungsbolzen 21 verbunden ist. Die Schwenkraste 8 ist in ihrem einen Teile gabelförmig ausgebildet und in ihrem anderen Teil einarmig, an dessen Ende eine ballige Reibfläche 10 in der Nähe einer Ausnehmung 7 angebracht ist, die an der Stirnfläche 11 des Riegelkolbens 12 anliegt und bei Betätigung gemäß Figur 1 nach oben bewegt wird. Der Riegelkolben 12 weist in seinem vorderen Teil eine Bohrung 25 auf, durch die der Bolzen 13 den Riegelkolben 12 mit dem mehrarmigen Hebel 14 vermittels dessen Bohrung 27 gelenkig verbindet.

Der mehrarmige Hebel 14 ist am Gehäuse 1 über den in eine Bohrung 28 eingreifenden Bolzen 15 angelenkt und er besitzt eine Verzahnung 16, die in das Rückstellelement 4 mit seiner am Umfang befindlichen Verzahnung 26 eingreift.

Der Riegelkolben 12 befindet sich etwa zur Hälfte in einer Gleitbohrung 23 des Ventils 2 und er weist an seinem Umfang eine ballige Führungsfläche 24 auf, die in der Gleitbohrung des Ventils 2 gleiten kann. Hierdurch wird unter anderem die Gefahr eines Verklemmens des Riegelkolbens 12 stark vermindert und es werden die Gleit- und die Querkräfte ebenfalls stark herabgesetzt. In dem Riegelkolben 12 befindet sich ein Ventilteil, das die Steuerleitung 2 öffnet oder schließt. Der Riegelkolben 12 ist durch eine Druckfeder 32 druckbeaufschlagt, die den Riegelkolben 12 nach Freigabe durch die Schwenkraste in eine vorgegebene Position drückt, die durch die Tiefe der Ausnehmung 7 definiert ist.

In einer Ausnehmung des Riegelkolbens 12 ist eine Ventildichtplatte 34 begrenzt verschieblich, vor allem in Richtung zur im Ventil 3 befindlichen Mündung 35 der Steuerleitung 2 durch einen Innenbund 36 des Riegelkolbens 12 abfangbar, gehaltert. Die Ventildichtplatte 34 liegt in der in Fig.1 dargestellten Ruhestellung der erfindungsgemäßen Vorrichtug unter der Kraft einer Feder 37 dicht auf der Mündung 35 auf.

In Figur 2 ist die als Notbremszugkasten ausgebildete Vorrichtung in einer Ansicht von oben gezeigt, um die Anordnung der einzelnen Elemente der erfindungsgemäßen Vorrichtung zu verdeutlichen. Im linken Teil der Zeichnung erkennt man die Verschraubung der Steuerleitung 2 zum Ventil 3, das auf der Grundplatte des Gehäuses 1 montiert ist. Etwa in der Mitte ist deutlich die gabelförmige Ausbildung der erfindungsgemaßen Schwenkraste 8 zu erkennen, deren Gabelarme sich zu beiden Seiten des vertikal verschieblich geführten Führungsbolzens 21 erstrecken. Quer zum Führungsbolzen 21 ist das Befestigungselement 18 deutlich zu erkennen, das die Verbindung zwischen den Handzuggriff 5 und der Vorrichtung darstellt; das Befestigungselement 18 ist zum Führungsbolzen 21 wie aus Fig.2 ersichtlich verstiftet gehaltert, so daß es sich um seine horizontal verlaufende Achse nicht drehen kann und dadurch auch den Handgriff 5 verdrehungssicher hält. Auf der rechten Seite der Figur 2 ist der elektrische Schalter 6 auf der Grundplatte des Gehäuse 1 angebracht.

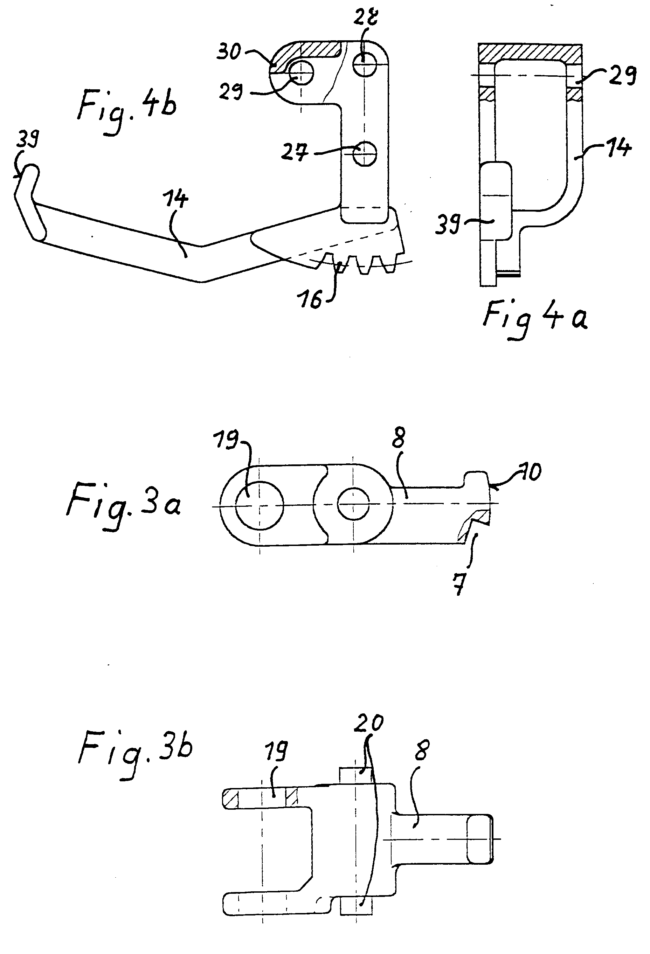

Als Einzelteil ist in Figur 3a noch einmal die erfindungsgemäße Schwenkraste 8 gezeigt. Figur 3b zeigt die Schwenkraste 8 in Draufsicht, so daß technisch alle Einzelheiten zu erkennen sind. In der Seitenansicht im linken Teil befindet sich der gabelförmige Teil der Schwenkraste 8, während im rechten Teil sich der einarmige Teil mit der erfindungsgemäßen Ausnehmung 7 bzw. der Steuerkante befindet. Im Anschluß an die Steuerkante erstreckt sich die gebogene Reibfläche 10, die im zusammengebauten Zustand der erfindungsgemäßen Vorrichtung an der Reibfläche 11 des Riegelkolbens 12 formschlüssig anliegt. In vorderen Teil der Gabelausbildung befindet sich die Bohrung 19, in die der Befestigungsbolzen 17 eingreift.

In Figur 3b ist in der Draufsicht zu erkennen, wie anstelle des vorerwähnten Bolzens 9 angeformte Zapfen 20 ausbildbar sind, die zur gelenkigen Lagerung der Schwenkraste 8 an Gehäuse 1 dienen.

In Figur 4a und Figur 4b ist der erfindungsgemäße mehrarmige Hebel 14 in einer Seiten- und Stirnansicht dargestellt. Der mehrarmige Hebel 14 besteht aus drei Armen, wobei der obere Arm in der Figur 4a gabelförmig ausgebildet ist, der linke langgestreckte Arm einteilig ausgebildet ist und am Ende eine Reibfläche 39 aufweist, die in 2 Abschnitte unterteilt ist, deren Flächen einen bestimmten Winkel zueinander einnehmen. Der mittlere Arm ist praktisch die lineare Verlängerung zwischen der Bohrung 28 und 27 und weist am Ende eine Mehrfachzahnung 16 auf, in die das Rückstellelement 4 mit seinem wenigstens einen Zahn 25 eingreift. Die Anzahl der Zähne richtet sich nach dem Schwenkbereich des mehrarmigen Hebels 14, der mehrere Funktionen zu erfüllen hat. Gemeinsamer Drehpunkt des mehrarmigen Hebels 14 ist die Achse der Bohrung 28, in die der Bolzen 15 zur Befestigung am Gehäuse 1 eingreift. In die Bohrung 27 greift der Bolzen 13 zur Befestigung des Riegelkolbens 12 am mehrarmigen Hebel 14 ein. Die Bohrung 29 in der Nase 30 dient zur Aufnahme des Bolzens 31, der wiederum als Anschlag für die Schwenkraste 8 vorgesehen ist für den Fall, daß aus irgendwelchen Gründen der Riegelkolben 12 das Ventil 3 nicht öffnet und somit eine gewaltsame Öffnung des Ventils 3 herbeigeführt werden muß. Die Bohrung 29 ist gegenüber der Bohrung 28 leicht nach unten versetzt.

Im nun folgenden wird die Funktion des Notbremszugkastens näher beschrieben. Die erfindungsgemäße Vorrichtung zum sicheren Be- bzw. Entlüften einer Steuerleitung 2 für Druckluftbremsen von Schienenfahrzeugen ist in ihrer Ausgangsstellung in Figur 1 dargestellt. Der in dieser Figur 1 nicht gezeigte Handzuggriff 5 befindet sich in seiner oberen Lage, wobei die Steuerleitung 2 geschlossen ist. Wird nun der Handzuggriff 5 mit einer vorgegebenen Kraft betätigt, so wird die Schwenkraste 8 um den Bolzen 9 gegen die Druckfeder 22 im Uhrzeigersinn gedreht. Die Steuerkante der Ausnehmung 7 am Schwenkriegel 8 bewegt sich dabei solange nach oben, bis der Riegelkolben 12 frei wird und angetrieben von der Druckfeder 32 nach rechts schnellt. Der mit dem Riegelkolben 12 verbundene, mehrarmige Hebel 14 wird dabei um den Bolzen 15 mitgedreht. Gleichzeitig wird das pneumatische Ventil 3 durch Abheben der Ventildichtplatte 34 vermittels des Innenbundes 36 von der Mündung 35 geöffnet und die Steuerleitung 2 entlüftet, wodurch eine Notbremsung eingeleitet wird.

Beim vorstehend erwähnten Drehen des mehrarmigen Hebels 14 läuft dessen Reibfläche 39 auf den Betätigungsstößel 38 des elektrischen Schalters 6 auf und drückt diesen zurück, wodurch der Schalter 6 schaltet. Dieses Schalten kann zur Anzeige der Betätigung der erfindungsgemäßen Vorrichtung genutzt werden.

Wenn der Handzuggriff 5 wieder losgelassen wird, so wird dieser unter Einwirkung der Druckfeder 22 in Richtung zur Ausgangslage gedrückt. Da die Steuernase bzw. Ausnehmung 7 an der Kante des Riegelkolbens 12 eingerastet hat, ist es jedoch nicht möglich, den Handzuggriff 5 wieder in seine Ausgangslage nach oben zurückzudrücken.

Eine Rückstellung kann erst vorgenommen werden, wenn mit einem geeigneten Schlüssel das Rückstellelement 4 entgegen dem Uhrzeigersinn gedreht wird, so daß der mehrarmige Hebel 14 gedeht und mit ihm der Riegelkolben 12 entsprechend nach links bewegt wird. Nach Wiederaufsetzen der Ventildichtplatte 34 auf die Mündung 35 kann die Schwenkraste 8 zusammen mit dem Handzuggriff 5, angetrieben von der Druckfeder 22, in die dargestellte Ausgangslage zurückspringen.

Für den Fall, daß während einer Betätigung die Druckfeder 32 nicht in der Lage sein sollte, den Riegelkolben 12 zu verschieben, kann dieser zwangsweise durch Aufwendung einer größeren Kraftbewegung am Handzuggriff 5 bewegt werden. Dies geschieht dadurch, daß der Handzuggriff 5 infolge des Anschlags der Schwenkraste 8 am Bolzen 31 die Nase 31 des mehrarmigen Hebels 14 hochhebt und somit zwangsweise durch diese mechanische Verbindung den Riegelkolben 12 in Wirkrichtung der Druckfeder 32 zieht und damit das Ventil 3 zur Steuerleitung 2 öffnet, wodurch eine Notfunktion eingeleitet wird.

Zusammenfassend kann festgestellt werden, daß die erfindungsgemäße Vorrichtung zum sicheren Be- bzw. Entlüften einer Steuerleitung 2 in einem pneumatischen Bremssystem zuverlässig arbeitet, insbesondere wegen der Bolzengelenke reibungsarm ist und nach den Auslösen der Notbremsung von Unbefugten nicht rückstellbar bzw. manipulierbar ist. Die Rückstellung mit Hilfe des Rückstellelements 4 ist infolge der erfindungsgemäßen Übersetzung ohne großen Kraftaufwand möglich.

Mit der vorliegenden Erfindung wird eine Vorrichtung in einem Gehäuse (1) zum sicheren Be- bzw. Entlüften einer Steuerleitung für Druckluftbremsen in Schienenfahrzeugen vorgestellt. In dem Gehäuse (1) ist die gesamte erfindungsgemäße Mechanik des Notbremszugkastens untergebracht und zusätzlich zu der Mechanik befindet sich ein elektrischer Schalter (6) und ein Steuerventil (3) in diesen Kasten. Der erfindungsgemäße Notbremskasten zeichnet sich durch seinen einfachen Aufbau und seine Funktionssicherheit aus, die unter anderem darin zu sehen ist, daß unbefugte Personen die einmal betätigte Vorrichtung nicht mehr manipulieren können. Die Rückstellung des Mechanismus in seine Ursprungslage, d. h. in die Stellung zu bringen, in der das Steuerventil (3) geschlossen ist, ist nur mittels eines geeigneten Schaffnerschlüssels möglich.

### Bezugszeichenliste

- 1: Gehäuse
- 2: Steuerleitung
- 3: Ventil
- 4: Rückstellelement
- 5: Handzuggriff
- 6: Elektrischer Schalter
- 7: Ausnehmung
- 8: Schwenkraste
- 9: Bolzen
- 10: Reibfläche
- 11: Stirnfläche
- 12: Riegelkolben
- 13: Bolzen
- 14: mehrarmiger Hebel
- 15: Bolzen
- 16: Verzahnung
- 17: Bolzen
- 18: Befestigungselement
- 19: Bohrung
- 20: Zapfen
- 21: Führungsbolzen
- 22: Druckfeder
- 23: Gleitbohrung
- 24: ballige Fläche
- 25: Bohrung
- 26: Zahn
- 27: Bohrung
- 28: Bohrung
- 29: Bohrung
- 30: Nase
- 31: Bolzen
- 32: Druckfeder
- 33: Ausnehmung
- 34: Ventildichtplatte
- 35: Mündung
- 36: Innenbund
- 37: Feder
- 38: Betätigungsstößel
- 39: Reibfläche

## Patentansprüche

1. Vorrichtung in einem Gehäuse (1) zum sicheren Be- bzw. Entlüften einer Steuerleitung (2) für Druckluftbremsen von Schienenfahrzeugen, insbesondere Notbremszugkasten, mit einem Ventil (3), einem Rückstellelement (4), einem Handzuggriff (5), einem elektrischen Schalter (6) und einem Mechanismus, gekennzeichnet durch:
- eine Ausnehmung (7) an einer Schwenkraste (8), die mittels eines Bolzens (9) gelenkig gelagert ist, wobei
- die Schwenkraste (8) in der Nähe der Ausnehmung (7) eine ballige Reibfläche (10) aufweist, die an der Stirnfläche (11) eines Riegelkolbens (12) anliegt, wobei
- der Riegelkolben (12) mit einem Bolzen (13) an einem mehrarmigen Hebel (14) angelenkt ist, und
- der mehrarmige Hebel (14) mittels eines Bolzens (15) am Gehäuse (1) gelenkig befestigt ist, wobei
- der mehrarmige Nebel (14) eine Verzahnung (16) aufweist, in die das Rückstellelement (4) eingreift und
- die Schwenkraste (8) mittels eines Bolzens (17) gelenkig mit dem Handzuggriff (5) verbunden ist.

2. Vorrichtung nach Anspruch 1, dadurch gekennzeichnet, daß das Ventil (3) und der Schalter (6) zusammen mit der Mechanik in einem Gehäuse (1) untergebracht sind.

3. Vorrichtung nach Anspruch 1, dadurch gekennzeichnet, daß der Handzuggriff (5) außerhalb des Gehäuses (1) über ein Befestigungselement (18) seitlich vom Gehäuse (1) angebracht ist.

4. Vorrichtung nach Anspruch 1, dadurch gekennzeichnet, daß die Schwenkraste (8) an ihrem einen Ende gabelförmig mit einer Bohrung (19) ausgebildet ist.

5. Vorrichtung nach Anspruch 1, dadurch gekennzeichnet, daß die Schwenkraste (8) drehbar mittels eines Bolzens (9) gelagert ist und in der Bohrung (19) sich ein gegen Drehung verstifteter Bolzen (17) befindet, wodurch die Schwenkraste (8) mit dem Führungsbolzen (21) verbunden ist.

6. Vorrichtung nach Anspruch 1 und 5, dadurch gekennzeichnet, daß der Führungsbolzen (21) mittels einer Feder (22) druckbeaufschlagt ist.

7. Vorrichtung nach Anspruch 1, dadurch gekennzeichnet, daß der Riegelkolben (12) innerhalb der Gleitbohrung (23) eine ballige Fläche (24) aufweist.

8. Vorrichtung nach Anspruch 1, dadurch gekennzeichnet, daß der Riegelkolben (12) am vorderen Teil eine Bohrung (25) aufweist, in die der Bolzen (13) zur Befestigung am mehrarmigen Hebel (14) eingreift.

9. Vorrichtung nach Anspruch 1, dadurch gekennzeichnet, daß ein Arm des mehrarmigen Hebels (14) gabelförmig ausgebildet ist und drei Bohrungen (27, 28, 29) aufweist.

10. Vorrichtung nach einem der vorangegangenen Ansprüche, dadurch gekennzeichnet, daß ein Arm des mehrarmigen Hebels (14) den Schalter (6) betätigt.

11. Vorrichtung nach einem der vorangegangenen Ansprüche, dadurch gekennzeichnet, daß die Bohrung (29) in der Nase (30) der Gabel des mehrarmigen Hebels (14) von einem Bolzen (31) durchsetzt ist.

12. Vorrichtung nach Anspruch 1, dadurch gekennzeichnet, daß die Verzahnung (16) an dem mehrarmigen Hebel (14) in einem bestimmten Abstand vom Drehpunkt (15, 28) angeordnet ist.

13. Vorrichtung nach Anspruch 1, dadurch gekennzeichnet, daß das Rückstellelement (4) an seinem Umfang mindestens einen Zahn (26) zum Eingriff in die Verzahnung (16) des mehrarmigen Hebels (14) aufweist.

14. Vorrichtung nach einem der vorangegangenen Ansprüche, dadurch gekennzeichnet, daß der Riegelkolben (12) durch eine Druckfeder (32) druckbeaufschlagt ist.

## Claims

1. Device in a housing (1) for the reliable pressurisation and release of pressure of a control line (2) for compressed air brakes in rail vehicles, in particular emergency brake tension boxes, having a valve (3), a resetting element (4), a manual pull handle (5), an electric switch (6) and a mechanism, characterized by:
- a recess (7) on a swing latch (8), which is mounted articulatedly by means of a pin (9),
- the swing latch (8) having a spherical friction surface (10) near the recess (7) which abuts the end surface (11) of a locking piston (12), wherein
- the locking piston (12) is articulated by a pin (13) on a multi-arm lever (14), and
- the multi-arm lever (14) is secured articulatedly by means of a pin (15) on the housing (1), wherein
- the multi-arm lever (14) has gear teeth into which the resetting element (4) engages and
- the swing latch (8) is connected articulatedly to the manual pull handle (5) by means of a pin (17).

2. Device according to claim 1, characterised in that the valve (3) and the switch (6) are housed together with the mechanism in a housing (1).

3. Device according to claim 1, characterised in that the manual pull handle (5) is fitted outside the housing (1) by means of a securing element (18) laterally of the housing (1).

4. Device according to claim 1, characterised in that the swing latch (8) is constructed like a fork at one of its ends with a bore (19).

5. Device according to claim 1, characterised in that the swing latch (8) is mounted rotatably by means of a pin (9), and a pin (17) secured against rotation is located in the bore (19), whereby the swing latch (8) is connected to the guide pin (21).

6. Device according to claim 1 and 5, characterised in that pressure is exerted on the guide pin (21) by means of a spring (22).

7. Device according to claim 1, characterised in that the locking piston (12) has a spherical surface (24) inside the sliding bore (23).

8. Device according to claim 1, characterised in that the locking piston (12) has a bore (25) in the front part, into which the pin (13) for securing to the multi-arm lever (14) engages.

9. Device according to claim 1, characterised in that one arm of the multi-arm lever (14) is of fork-like construction and has three bores (27, 28, 29).

10. Device according to one of the preceding claims, characterized in that one arm of the multi-arm lever (14) actuates the switch (6).

11. Device according to one of the preceding claims, characterised in that the bore (29) in the tip (30) of the fork of the multi-arm lever (14) is penetrated by a pin (31).

12. Device according to claim 1, characterised in that the gear teeth (16) on the multi-arm lever (14) are arranged at a specific distance from the point of rotation (15, 28).

13. Device according to claim 1, characterised in that the resetting element (4) has on its circumference at least one tooth (26) for engagement into the teeth (16) of the multi-arm lever (14).

14. Device according to one of the preceding claims, characterised in that pressure is exerted on the locking piston (12) by means of a compression spring (32).

## Revendications

1. Dispositif installé dans un boîtier (1) pour aérer ou désaérer de façon sure une canalisation de commande (2) pour des freins à air comprimé de véhicules sur rails, notamment de boîtes d'appel de signal d'alarme, comportant une soupape (3), un élément de rappel (4), une poignée de traction (5), un interrupteur électrique (6) et un mécanisme, caractérisé par :
- un logement (7) situé dans un organe d'encliquetage pivotant (8), qui est monté de façon articulée à l'aide d'un axe (9),
- l'organe d'encliquetage pivotant (8) possédant à proximité de l'évidement (7), une surface de frottement renflée (10), qui s'applique contre la surface frontale (11) d'un piston de verrouillage (12),
- le piston de verrouillage (12) étant articulé, au moyen d'un axe (13), sur un levier (14) à plusieurs bras, et
- le levier (14) à plusieurs bras étant fixé de manière articulée au moyen d'un axe (15) sur le boîtier (1),
- le levier (14) à plusieurs bras comportant une denture (16), avec laquelle engrène l'élément de rappel (4), et
- l'organe d'encliquetage pivotant (8) étant relié d'une manière articulée à la poignée de traction (5) à l'aide d'un axe (17).

2. Dispositif selon la revendication 1, caractérisé en ce que la soupape (3) et l'interrupteur (6) sont logés conjointement avec le mécanisme dans un boitier (1).

3. Dispositif selon la revendication 1, caractérisé en ce que la poignée de traction (5) est disposée à l'extérieur du boîtier (1) et latéralement par rapport à ce dernier, par l'intermédiaire d'un élément de fixation (18).

4. Dispositif selon la revendication 1, caractérisé en ce que l'organe d'encliquetage pivotant (8) est agencé, au niveau de l'une de ses extrémités, sous la forme d'une fourche comportant un perçage (19).

5. Dispositif selon la revendication 1, caractérisé en ce que l'organe d'encliquetage pivotant (8) est monté de manière à pouvoir pivoter au moyen d'un axe (9) et que dans le perçage (19) est disposé un axe (17) goupillé contre toute rotation, ce qui a pour effet que l'organe d'encliquetage pivotant (8) est relié à l'axe de guidage (21).

6. Dispositif selon les revendications 1 et 5, caractérisé en ce que l'axe de guidage (21) est chargé en pression au moyen d'un ressort (22).

7. Dispositif selon la revendication 1, caractérisé en ce que le piston de verrouillage (12) comporte, à l'intérieur d'un perçage de glissement (23), une surface renflée (24).

8. Dispositif selon la revendication 1, caractérisé en ce que le piston de verrouillage (12) possède, sur sa partie avant, un perçage (25), dans lequel s'engage le goujon (13) pour la fixation sur le levier (14) à plusieurs bras.

9. Dispositif selon la revendication 1, caractérisé en ce qu'un bras du levier (14) à plusieurs bras est agencé en forme de fourche et comporte trois perçages (27, 28, 29).

10. Dispositif selon l'une des revendications précédentes, caractérisé en ce qu'un bras du levier (14) à plusieurs bras actionne l'interrupteur (6).

11. Dispositif selon l'une des revendications précédentes, caractérisé en ce que le perçage (29) est traversé par un axe (31), au niveau du bec (30) de la fourche du levier (14) à plusieurs bras.

12. Dispositif selon la revendication 1, caractérisé en ce que la denture (16) est disposée sur le levier (14) à plusieurs bras, à une distance déterminée du centre de rotation (15, 28).

13. Dispositif selon la revendication 1, caractérisé en ce que l'élément de rappel (15) comporte, sur sa périphérie, au moins une dent (26) destinée à s'engager dans la denture (16) du levier (14) à plusieurs bras.

14. Dispositif selon l'une des revendications précédentes, caractérisé en ce que le piston de verrouillage (12) est chargé en pression par un ressort de rappel (32).
